# EUROPEAN PATENT APPLICATION

(11) **EP 1 428 638 A1**
(43) Date of publication of application: **16.06.2004**
(21) Application number: 03078082.9
(22) Date of filing: 29.09.2003
(51) Int. Cl.: B27B 25/02, B27L 1/00, A01G 23/095

(54) **Feed rolls for tree handling equipment**

(30) Priority: 13.12.2002 CA 2414553
(71) Applicant: Risley Enterprises Ltd., Grande Prairie, Alberta T8V 4C8 (CA)
(72) Inventor: Isley, Reggald E., Alberta, T8V 4C8 (CA)
(74) Representative: Bottero, Claudio

(57) **Abstract**

A feed roll (110) for tree handling has a number of resiliently mounted strips (124) which substantially cover its outer face. The strips have leading and trailing edges shaped to interdigitate with one another. A layer of resilient material is located between the strips and a drum (112). The resilient material has a hardness of 80 or less on the Shore scale.

## Description

### Technical Field

This invention relates to rolls for feeding logs through tree handling equipment such as delimbers, tree processors and the like.

### Background

Some tree delimbers include a pair of curved knives that can be brought into contact with the outer surface of a log. The log is pulled past the knives which shear off any limbs projecting from the log. In typical tree delimbers the log is moved by compressing it between a pair of counter-rotating feed rollers. The feed rollers grip the log and move it along. An example of a tree delimber which works in this general manner is the SIDEWINDER™ model delimbers available from Risley Manufacturing Ltd. of Grande Prairie, Alberta, Canada.

Some existing feed rollers are faced with spikes to enable them to better grip the outer surface of a log. These spikes can incise the outer layer of wood of the log which is undesirable.

Other commonly-used feed rollers comprise a rubber-coated cylinder having a chain mesh stretched over its outer surface. These feed rollers, while reducing damage to the log surface, suffer from relatively short service lives and can be undesirably expensive.

Commonly-owned U.S. patent No. 4,972,890 describes a type of feed roller which comprises a cylindrical drum having contour-edged bars bolted to its outer surface. The contour-edged bars are relatively widely spaced apart. These feed rollers have not been completely successful, because they can cause chipping of the outer surface of logs.

Despite the variety of feed rollers available for use in tree processing machinery there remains a need for feed rollers which improve on the performance and/or cost effectiveness of current feed rollers.

### Summary of the Invention

This invention provides feed rolls for tree handling. A feed roll provided by one aspect of the invention comprises: a substantially cylindrical drum having a longitudinal axis; a plurality of strips spaced apart around a circumference of the drum, the strips extending substantially parallel to the longitudinal axis, each strip having a leading edge and a trailing edge, each strip having projections on its leading and trailing edges, the projections on the leading edge of each strip interdigitating with projections on a trailing edge of an adjacent strip; and, a layer of resilient material between each of the strips and the drum.

Another aspect of the invention provides a feed roller for a tree handling machine, the feed roller comprising: first and second substantially circumferential rings longitudinally spaced apart from one another; a plurality of strips extending between the first and second rings, the strips each having a first end extending under an edge of the first ring and a second end extending under an end of the second ring, a leading edge and a trailing edge, the leading of each strip having longitudinally spaced apart projections interdigitating with projections on a trailing edge of an adjacent strip; and, a rotatable drum comprising a resilient surface that bears resiliently against inner faces of the strips.

Further features and aspects of the invention are described below.

### Brief Description of Drawings

In Figures which illustrate non-limiting embodiments of the invention:
Figure 1 is a side elevation of a prior art tree delimbing machine which includes a pair of feed rollers;
Figure 2 is an enlarged end view of the feed roller portion of the machine of Figure 1 equipped with feed rolls according to this invention;
Figure 3 is a cross-section through a feed roller;
Figure 4 is a perspective view of a feed roller according to one embodiment of the invention;
Figure 5 illustrates a front elevation view of a strip according to an alternative embodiment of the invention;
Figure 6 is a transverse cross section through a portion of the feed roll of Figure 4;
Figure 7 is a longitudinal cross section through a portion of the feed roll of Figure 4;
Figure 8 is a transverse cross section through a portion of a feed roll according to an alternative embodiment of the invention;

### Description

Throughout the following description, specific details are set forth in order to provide a more thorough understanding of the invention. However, the invention may be practiced without these particulars. In other instances, well known elements have not been shown or described in detail to avoid unnecessarily obscuring the invention. Accordingly, the specification and drawings are to be regarded in an illustrative, rather than a restrictive, sense.

This invention relates to feed rolls for feeding logs. Such feed rolls may be used in various applications. Feed rolls may be used, for example, in roll-stroke delimbers.

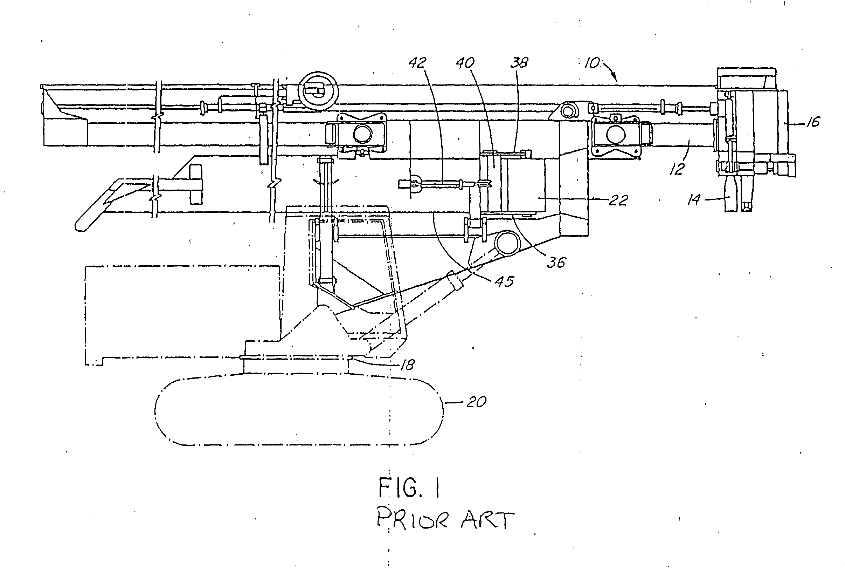

Figure 1 illustrates a roll-stroke delimber **10** having a slidably displaceable boom **12** with a tree grapple **14** and saw **16** mounted at the free end of boom **12.** Boom **12** is rotatably and pivotably supported above platform **18.** Platform **18** is in turn mounted on a pair of treads **20** which may be driven in conventional fashion to propel delimber **10** relative to felled trees that are to be delimbed.

Roll-stroke delimber **10** may be actuated by its operator to tightly close grapple **14** about the butt of a felled tree and to retract boom **12** and, with it, the tree, toward log feed roller mechanism **22**. Once grapple 14 is released, log feed roller mechanism **22** grips the tree and feeds it backwardly through tree guide tube **45**. The tree is delimbed as its branches strike the arms of grapple **14** or cutters (not shown) mounted at the forward end of tube **45**. Once the tree has been delimbed, log feed roller mechanism **22** may be actuated to propel the delimbed tree forwardly through tree guide tube **45**. Saw **16** may then be actuated at selected intervals to buck the delimbed tree into desired lengths.

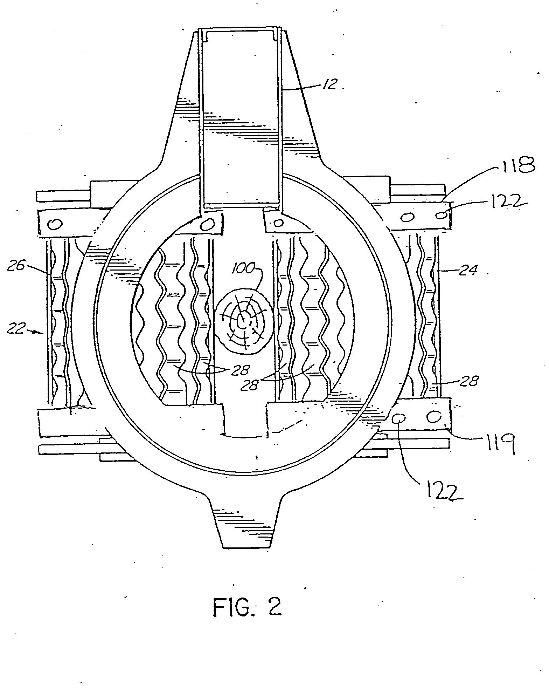

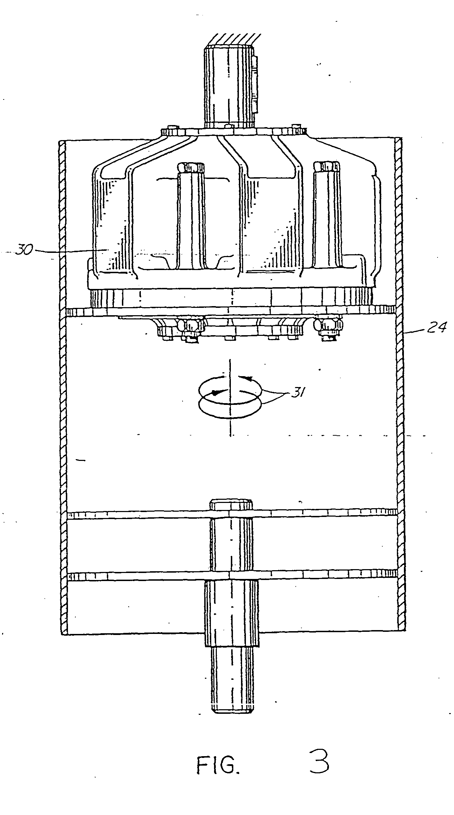

Log feed roller mechanism **22** (Figure 2) comprises a pair of drive rolls **24, 26** mounted parallel to one another (i.e. the longitudinal axes of rolls **24, 26** are parallel to one another and remain generally parallel to one another throughout the operation of delimber **10**). A "drive means", such as a hydraulic motor **30** (Figure 3) is connected to drivably counter-rotate rolls **24, 26** about their respective longitudinal axes. That is, motor **30** is capable of rotating roll **24** in either of the two directions illustrated by arrows **31** (Figure 3) Similar provision is made for bidirectional rotation of roll **26**. Other arrangements of driveshafts, motors, engines, etc. could be provided to turn one or both of feed rolls **24, 26**. In the illustrated embodiment, a motor **30** is mounted inside each feed roll **24, 26.**

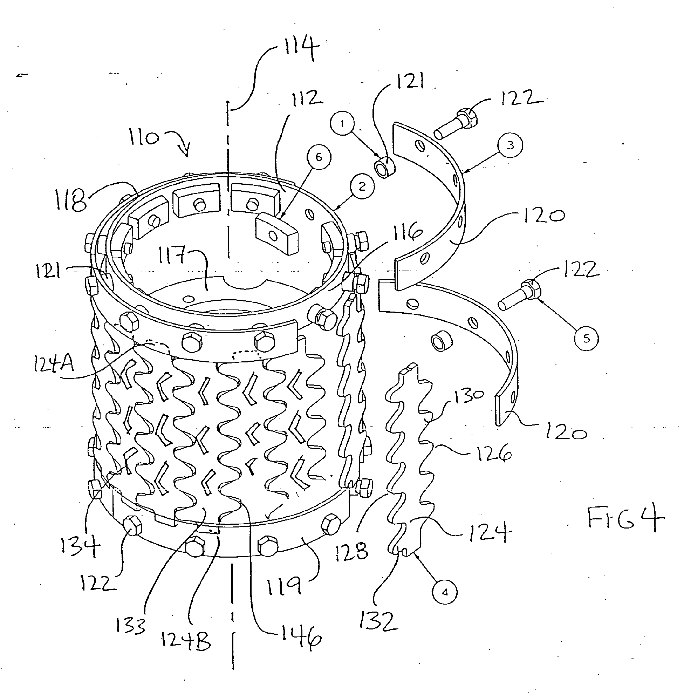

Figure 4 shows a feed roll **110** according to one embodiment of this invention. Feed roller **110** comprises a cylindrical drum **112** having a longitudinal axis **114** and an outer surface **116.** A flange **117** inside drum **112** permits drum **112** to be mounted for rotation on a tree handling machine such as, for example, a tree delimber. First and second rings **118** and **119** extend circumferentially around drum **112** at longitudinally spaced-apart locations. Each of rings **118** and **119** is spaced apart from outer surface **116** by spacers **121.**

In the illustrated embodiment, rings **118** and **119** each comprise a plurality of arc-shaped sectors **120** which can be independently dismounted from drum **112.** Sectors **120** are held in place by bolts **122** or other suitable fasteners.

A plurality of longitudinally extending strips **124** substantially cover the face of feed roller **110**. Each strip **124** has a first end **124A** engaged under first ring **118** and a second end **124B** engaged under second ring **119**. Strips **124** have leading edges **126** and trailing edges **128**. Leading edges **126** are shaped to have a plurality of longitudinally spaced-apart projections **130.** Each trailing edge **128** has a shape which is complementary to leading edge **126** of the adjacent strip **124**. Projections **130** on leading edges **126** interdigitate with complementary projections **132** on trailing edges **128**.

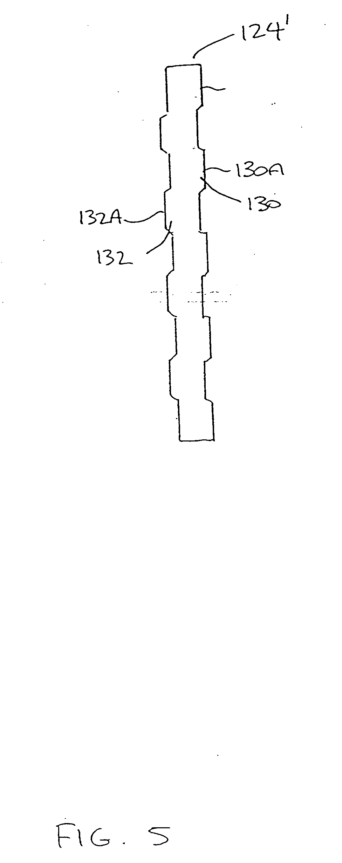

In the illustrated embodiment, leading and trailing edges **126, 128** have wavy shapes such that projections **130** and **132** are rounded. Strips **124** may be called "contour-edged". Figure 5 shows a strip **124'** according to an alternative embodiment of the invention. Strip **124'** has leading and trailing edges **126, 128,** shaped to provide projections **130** and **132** that have flattened ends **130A, 132A.**

Outer faces **133** of strips **124** are textured to enhance frictional contact with a log. In the embodiment of Figure 4, V-bars **134** are affixed to outer faces **133.**

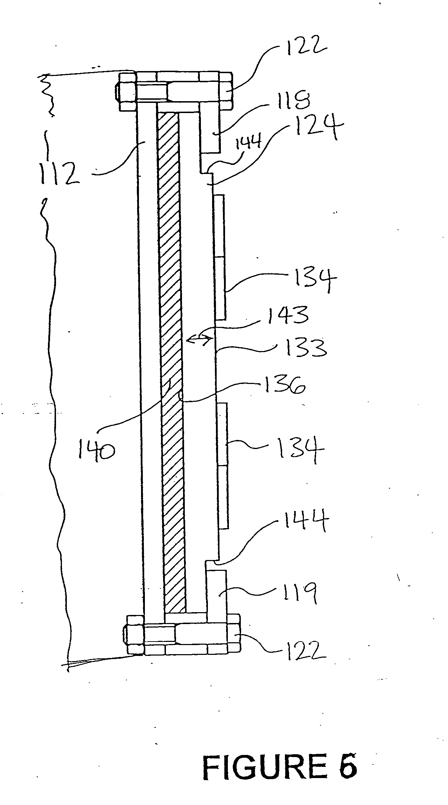

An inner face **136** (see Figure 6) of each strip **124** is faced with a layer **140** of a resilient material. Layer **140** may, for example, comprise a layer of rubber, urethane or ceramic-impregnated urethane bonded to inner face **136**. Layer **140** preferably has a hardness of 80 or less on the Shore scale. In some embodiments, layer **140** has a hardness in the range of 25 to 45 on the Shore scale. In some embodiments, layer **140** has a harness in the range of 25 to 35 on the Shore scale. In some embodiments, layer **140** has a thickness in the range of about 1/2 inches to about 3 inches.

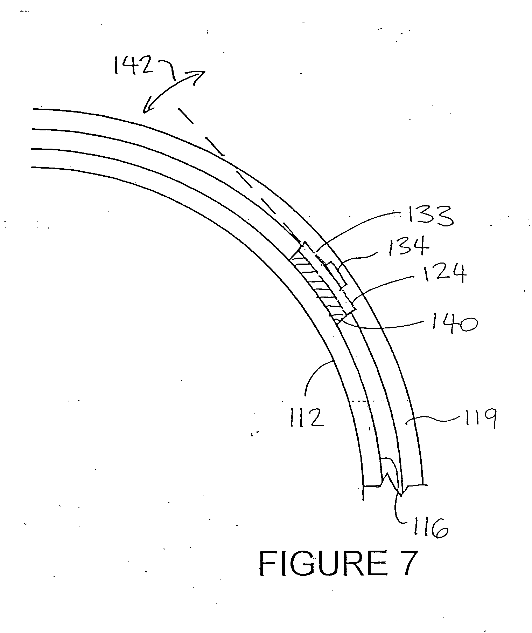

The construction of feed roller **110** permits strips **124** to rock slightly from side to side, as indicated by arrows **142** (Figure 7), under the forces encountered when feed roller **110** bears against a log.

Strips **124** are preferably fabricated of a material which, if bent slightly, will spring back to its original shape. In one embodiment, strips **124** are fabricated from QT-100 steel (as defined by CSA standard 640.21/M). The resilience of strips **124** and the ability of layer **140** to yield under pressure permits strips **124** to flex inwardly and outwardly, as indicated by arrows **143** (Figure 6), under the forces encountered when feed roller **110** bears against a log.

Strips **124** are captured by rings **118** and **119,** but are free to float slightly. Longitudinal movement of strips **124** is limited by abutment surfaces on strips **124**. In the illustrated embodiment of Figure 6, the abutment surfaces comprise steps **144** on outer faces **133**. Abutment surfaces could also be provided by other projections from strips **124,** which can abut against part of the feed roll, such as rings **118** and **119,** which are fixed to drum **112.** Circumferential motion of strips **124** is limited by adjacent strips **124.** Strips **124** may each be free to float circumferentially relative to drum **112** until they contact an adjacent strip **124**.

Strips **124** may be dimensioned so that, when strips **124** are equally spaced-apart around drum **112,** leading edge **126** of each strip **124** is separated from the trailing edge **128** of an adjacent strip 124 by a narrow gap **146** (Figure 4). During use, gaps **146** tend to become packed with wood fibers and other fine debris. This further locks strips **124** together and provides some cushioning between adjacent strips **124.**

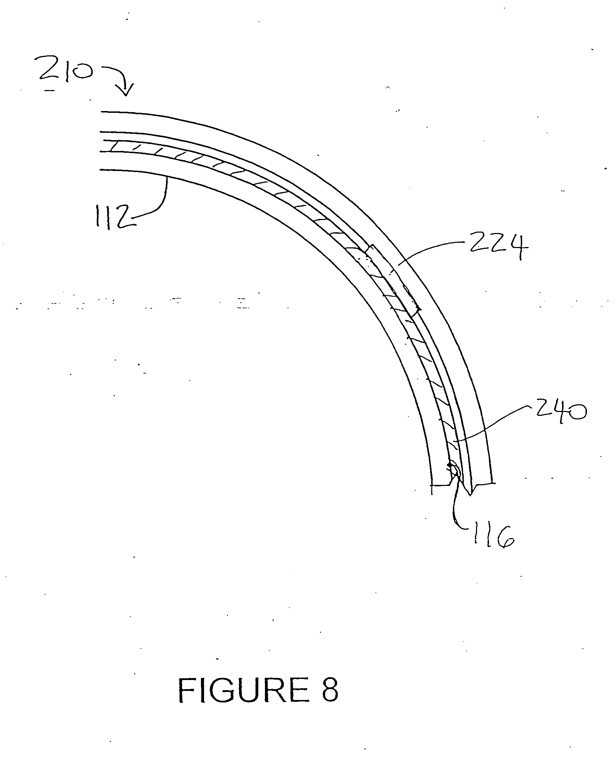

Figure 8 shows a section through a portion of a feed roller **210** according to an alternative embodiment of the invention. Feed roller **210** is similar to feed roller **110**, except that a layer **240** of resilient material is affixed to surface **116** of drum **112**. Strips **224** of the Figure 8 embodiment may lack the layer **140** of resilient material of strips **124** of the Figure 7 embodiment. Strips **224** are free to float slightly, as described above and can flex inwardly and outwardly and rock slightly under the forces exerted on them when feed roller **210** bears against a log. Layer **240** preferably has a hardness of 80 or less on the Shore scale. In some embodiments, layer **240** has a hardness in the range of 25 to 45 on the Shore scale. In some embodiments, layer **240** has a hardness in the range of 25 to 35 on the Shore scale.

As will be apparent to those skilled in the art in the light of the foregoing disclosure, many alterations and modifications are possible in the practice of this invention without departing from the spirit or scope thereof. For example:
- one of rings **118** and **119** could be non-removably mounted to drum **112**;
- one or both of rings **118** and **119** could be replaced with other attachment means which permit strips **124** or **224** to float slightly;
- feed rolls according to the invention may be used in any context in which it is desired to feed a tree longitudinally.

Accordingly, the scope of the invention is to be construed in accordance with the substance defined by the following claims.

## Claims

1. A feed roll for tree handling, the feed roll comprising:
a substantially cylindrical drum having a longitudinal axis;
a plurality of strips spaced apart around a circumference of the drum, the strips extending substantially parallel to the longitudinal axis, each strip having a leading edge and a trailing edge, each strip having projections on its leading and trailing edges, the projections on the leading edge of each strip interdigitating with projections on a trailing edge of an adjacent strip; and,
a layer of resilient material between each of the strips and the drum.

2. The feed roll of claim 1 wherein the resilient material has a hardness of less than 80 on the Shore scale.

3. The feed roll of claim 2 wherein the resilient material has a hardness in the range of 25 to 35 on the Shore scale.

4. The feed roll of claim 1 wherein the resilient material comprises at least one of: rubber, urethane and ceramic-impregnated urethane.

5. The feed roll of claim 2 wherein the resilient material comprises at least one of: rubber, urethane and ceramic-impregnated urethane.

6. The feed roll of claim 3 wherein the resilient material comprises at least one of: rubber, urethane and ceramic-impregnated urethane.

7. The feed roll of claim 1 wherein the layer of resilient material is bonded to the drum.

8. The feed roll of claim 1 wherein the layer of resilient material is bonded to the strips.

9. The feed roll of claim 1 wherein the leading and trailing edges of each strip have a wavy shape.

10. The feed roll of claim 1 wherein the strips comprise steel strips.

11. The feed roll of claim 10 wherein the strips comprise quenched tempered steel.

12. The feed roll of claim 1 comprising first and second longitudinally spaced apart rings extending circumferentially around and spaced apart from the drum, wherein a first end of each of the strips is engaged between the first ring and drum and a second end of each of the strips is engaged between the second ring and the drum.

13. The feed roll of claim 12 wherein outer surfaces of each of the strips comprise first and second abutment surfaces which limit longitudinal movement of the strips by abutting respectively against the first and second rings.

14. The feed roll of claim 12 wherein a shape of the leading edge of each strip is complementary to a shape of the trailing edge of the strip.

15. The feed roll of claim 14 wherein outer faces of the strips comprise textured surfaces.

16. A feed roll for tree handling, the feed roll comprising:
a substantially cylindrical drum having a longitudinal axis;
a plurality of steel strips spaced apart around a circumference of the drum, the strips extending substantially parallel to the longitudinal axis, each steel strip having a leading edge and a trailing edge, each steel strip having a leading edge shaped to provide projections, and a trailing edge having a shape complimentary to the shape of the leading edge, the projections on the leading edge of each steel strip interdigitating with projections on a trailing edge of an adjacent steel strip; and,
a layer of resilient material having a hardness of less than 80 on the Shore scale located between each of the steel strips and the drum.

17. The feed roll of claim 16 wherein outer surfaces of each of the strips comprise abutment surfaces which limit longitudinal movement of the strips by abutting against parts fixed to the drum.

18. The feed roll of claim 16 wherein the resilient material has a hardness in the range of 25 to 35 on the Shore scale.

19. The feed roll of claim 16 wherein the layer of resilient material is bonded to the drum.

20. The feed roll of claim 16 wherein the layer of resilient material is bonded to the strips.

21. The feed roll of claim 18 wherein the layer of resilient material is bonded to the drum.

22. The feed roll of claim 18 wherein the layer of resilient material is bonded to the strips.

23. A feed roll for a tree handling machine, the feed roll comprising:
first and second substantially circumferential rings longitudinally spaced apart from one another;
a plurality of strips extending between the first and second rings, the strips each having a first end extending under an edge of the first ring and a second end extending under an end of the second ring, a leading edge and a trailing edge, the leading of each strip having longitudinally spaced apart projections interdigitating with projections on a trailing edge of an adjacent strip; and,
a rotatable drum comprising a resilient surface that bears resiliently against inner faces of the strips.

24. The feed roll of claim 23 wherein the resilient surface has a hardness of less than 80 on the Shore scale.

25. A replacement tree gripping member for a feed roll for tree handling, the tree gripping member comprising:
a strip of metal having a textured outer face,
an inner face bearing a layer of a resilient material having a hardness of less than 80 on the Shore scale,
a wavy leading edge comprising a plurality of projections, and
a wavy trailing edge comprising a plurality of projections complementary to the leading edge projections.

26. The replacement tree gripping member of claim 25 wherein the outer face comprises abutment surfaces adjacent to each of first and second ends of the member.
